# FASCICULE DE BREVET EUROPEEN

(11) **EP 2 137 072 B1**
(45) Date de publication et mention de la délivrance du brevet: **31.05.2017**
(21) Numéro de dépôt: 08736139.0
(22) Date de dépôt: 11.04.2008
(51) Int. Cl.: B64D 27/26

(54) **DISPOSITIF D'ACCROCHAGE DE MOTEUR D'AERONEF ET AERONEF COMPORTANT AU MOINS UN TEL DISPOSITIF**
VORRICHTUNG ZUR BEFESTIGUNG EINES FLUGZEUGTRIEBWERKS UND FLUGZEUG MIT MINDESTENS EINER DERARTIGEN VORRICHTUNG
DEVICE FOR ATTACHING AN AIRCRAFT ENGINE AND AIRCRAFT COMPRISING AT LEAST ONE SUCH DEVICE

(30) Priorité: 13.04.2007 FR 0754464
(43) Date de publication de la demande: 30.12.2009
(73) Titulaire: AIRBUS OPERATIONS, 31060 Toulouse (FR)
(72) Inventeur: COMBES, Stéphane, F-31660 Buzet sur Tarn (FR); GUILLET, Emmanuel, F-31830 Plaisance du Touch (FR)
(74) Mandataire: Ilgart, Jean-Christophe
(86) Numéro de dépôt international: PCT/EP2008/054428
(87) Numéro de publication internationale: WO 2008/125631

(56) Documents cités:
- EP-A- 0 564 126
- FR-A- 2 770 486
- US-B1- 6 296 203

## Description

### DOMAINE TECHNIQUE ET ART ANTÉRIEUR

La présente invention se rapporte de façon générale à un dispositif d'accrochage d'un moteur d'aéronef, par exemple destiné à être interposé entre une voilure d'aéronef et le moteur concerné, ainsi qu'à un ensemble moteur comprenant un tel dispositif d'accrochage.

L'invention peut être utilisée sur tout type d'aéronef équipé de turboréacteurs ou de turbopropulseurs.

Ce type de dispositif d'accrochage, également appelé mât d'accrochage ou « EMS » (de l'anglais «Engine Mounting Structure»), peut indifféremment être employé pour suspendre un moteur au-dessous de la voilure de l'aéronef, monter ce moteur au-dessus de cette même voilure, ou bien encore pour rapporter ce moteur en partie arrière du fuselage de l'aéronef.

Un tel dispositif d'accrochage est en effet prévu pour former l'interface de liaison entre un turbomoteur et une voilure de l'aéronef. Il permet de transmettre à la structure de cet aéronef les efforts générés par son turbomoteur associé, et autorise également le cheminement du carburant, des systèmes électriques, hydrauliques, et air entre le moteur et l'aéronef.

Afin d'assurer la transmission des efforts, le dispositif d'accrochage comporte une structure rigide, dite structure primaire, souvent du type «caisson», c'est-à-dire formée par l'assemblage de longerons supérieurs et inférieurs et de panneaux latéraux raccordés entre eux par l'intermédiaire de nervures transversales.

D'autre part, le dispositif est muni de moyens d'accrochage interposés entre le turbomoteur et la structure rigide, ces moyens comportant globalement deux attaches moteur, ainsi qu'un dispositif de reprise des efforts de poussée générés par le turbomoteur.

Dans l'art antérieur, ce dispositif de reprise comprend par exemple deux bielles latérales raccordées d'une part au carter du turbomoteur, et d'autre part rapportées sur un palonnier, lui-même articulé sur la structure rigide du dispositif d'accrochage.

De la même façon, le dispositif d'accrochage comporte également une autre série d'attaches constituant un système de montage interposé entre la structure rigide et la voilure de l'aéronef, ce système étant habituellement composé de deux ou trois attaches.

Enfin, le mât est pourvu d'une structure secondaire assurant la ségrégation et le maintien des systèmes tout en supportant des carénages aérodynamiques.

Comme cela a été évoqué ci-dessus, les solutions proposées antérieurement prévoient que le dispositif de reprise des efforts de poussée intègre un palonnier articulé sur la structure rigide, par l'intermédiaire d'un axe de liaison. A ce titre, il est indiqué que pour assurer une fonction dite « Fail Safe » pour la transmission d'efforts selon la direction longitudinale, le palonnier est habituellement réalisé à l'aide de deux ferrures superposées, de même que l'axe de liaison prend quant à lui la forme d'un axe doublé. Ainsi, en cas de rupture de l'une des deux ferrures superposées constituant le palonnier, c'est l'autre qui assure seule la reprise des efforts provenant des bielles latérales, et, en cas de rupture de l'axe extérieur de l'axe de liaison doublé, c'est alors l'axe intérieur qui prend le relais pour la reprise et la transmission de ces mêmes efforts selon la direction longitudinale.

Un exemple de dispositif de reprise d'effort est connu du document FR 06 52890, ce dispositif comporte deux bielles de reprise d'effort reliées chacune par une extrémité arrière à un palonnier par une première liaison mécanique, lui-même relié mécaniquement à un support rigide fixé sur le mât. Les bielles sont également reliées au niveau de leur extrémité arrière à une seconde liaison mécanique avec jeu entre l'extrémité arrière de chaque bielle et la structure rigide. Ainsi, en fonctionnement normal, la transmission d'effort des bielles vers le mât s'effectue par la première liaison mécanique. En cas de défaillance, par exemple en cas de rupture du palonnier, les efforts sont transmis par les deuxièmes liaisons mécaniques. Ce dispositif de reprise d'effort est très performant et très sûr, cependant il présente une conception complexe et une masse élevée.

Un autre dispositif de reprise d'effort est connu du document FR 2 887 850, pour lequel la fonction fail-safe est obtenue notamment au moyen de butées prévues en avant du dispositif de reprise d'effort, les butées étant fixées directement sur le caisson. Or, dans certaines applications, le caisson présente une largeur relativement faible ne permettant pas la fixation de telles butées. Deux palonniers superposés sont également prévus, un premier palonnier pour la reprise de poussée en fonctionnement normal, et un deuxième palonnier de reprise de la poussée en cas de rupture du premier palonnier.

Un dispositif d'accrochage de moteur pour aéronef comportant un dispositif de reprise d'effort comportant une ferrure en une seule pièce destinée à être fixée sur une poutre moteur, un palonnier monté sur la ferrure et deux bielles de reprises d'effort reliées à la ferrure par le palonnier est décrit dans le document US 6,296,203 B1 qui est considéré comme le document de l'art antérieur le plus proche. C'est par conséquent un but de la présente invention d'offrir un dispositif d'accrochage d'un moteur d'aéronef, comportant un dispositif de reprise d'effort offrant une fonction, dite « fail-safe », de conception simple et compacte, et de masse réduite.

### EXPOSÉ DE L'INVENTION

Le but précédemment énoncé est atteint par un dispositif d'accrochage de moteur pour aéronef comportant un dispositif de reprise d'effort comportant une ferrure principale destinée à être fixée sur le caisson, une ferrure supplémentaire fixée sur la ferrure principale, deux bielles de reprise d'effort reliées mécaniquement à la ferrure principale par un palonnier, les bielles étant fixées par une première extrémité longitudinale sur le palonnier au moyen d'un axe, ledit axe traversant avec jeu la ferrure supplémentaire. En cas de rupture d'une bielle, le palonnier vient alors en butée contre la ferrure supplémentaire par ledit axe, sa rotation est alors limitée. En cas, de rupture du palonnier ou de l'axe entre le palonnier et la ferrure principale, la reprise d'effort s'effectue directement entre la ou les bielles concernées et la ferrure supplémentaire.

En d'autres termes, la ferrure supplémentaire se superpose à la ferrure principale, et les liaisons mécaniques entre les bielles et la ferrure principale et entre les bielles et la ferrure supplémentaire comportent un axe de rotation commun, ce qui permet d'avoir un dispositif compact et de masse réduite.

La présente invention a alors principalement pour objet un dispositif d'accrochage de moteur pour aéronef comportant un dispositif de reprise d'effort comportant une ferrure principale destinée à être fixée sur une poutre attache moteur fixée sur un caisson, une ferrure supplémentaire fixée sur la ferrure principale, la ferrure supplémentaire étant distincte de la ferrure principale, deux bielles de reprise d'effort reliées à la ferrure principale par un palonnier, chacune des bielles étant reliée par une première extrémité longitudinale au palonnier par une première liaison mécanique présentant au moins un axe de rotation, chacune des bielles étant reliée par leur première extrémité longitudinale à la ferrure supplémentaire par une deuxième liaison mécanique présentant au moins un axe de rotation, ladite deuxième liaison mécanique présentant un jeu, lesdites première et deuxième liaisons mécaniques ayant au moins un axe de rotation en commun.

Dans un exemple particulier, les première et deuxième liaisons comportent chacune un seul axe de rotation, réalisé au moyen d'un axe traversant la bielle, le palonnier et la ferrure supplémentaire, le jeu de la deuxième liaison mécanique étant obtenu par un alésage de diamètre supérieur à l'axe, pratiqué dans la ferrure supplémentaire.

Par exemple, la ferrure supplémentaire comporte une base et des bras formant sensiblement un V, ladite base étant fixée sur la ferrure principale et les bras s'étendant de chaque côté latéral de la ferrure principale en direction du palonnier, les axes des bielles traversant des alésages pratiqués dans des extrémités des bras de la ferrure supplémentaire.

La ferrure principale peut comporter deux branches ménageant un entrefer recevant la base de la ferrure supplémentaire.

Le palonnier peut par exemple comporter des chapes latérales recevant les extrémités des bras de la ferrure supplémentaire, les bielles comportant chacune une chape entourant chacune une chape latérale du palonnier. Le palonnier peut alors être relié mécaniquement à la ferrure principale par un axe traversant la ferrure et un corps central du palonnier duquel font saillie les flasques latérales.

Dans un exemple avantageux, les axes reliant les bielles au palonnier et à la ferrure supplémentaire et l'axe reliant le palonnier à la ferrure principale sont parallèles.

Le dispositif d'accrochage selon la présente invention peut comporter une attache moteur avant et une attache moteur arrière, le dispositif de reprise d'effort étant raccordé à l'attache moteur arrière.

La présente invention a également pour objet un ensemble moteur comprenant un moteur et un dispositif d'accrochage du moteur, ledit dispositif d'accrochage étant un dispositif selon la présente invention.

La présente invention a également pour objet un aéronef comportant au moins un ensemble moteur selon la présente invention, assemblé sur une aile ou sur une partie arrière de fuselage de cet aéronef.

### BRÈVE DESCRIPTION DES DESSINS

La présente invention sera mieux comprise avec la description qui va suivre et les dessins en annexe, sur lesquels :
- la figure 1 représente une vue schématique générale de côté d'un ensemble moteur pour aéronef, comprenant un mât d'accrochage,
- la figure 2 est une vue en perspective de dessus d'un dispositif de reprise d'effort selon la présente invention, les bielles de transmission d'effort ayant été omises,
- la figure 3 est une vue identique à celle de la figure 1, les extrémités des bielles ayant été ajoutées,
- la figure 4 est une vue en éclaté de la figure 3, les axes ayant été supprimés et un pion de poussée ayant été ajouté,
- les figures 5A et 5B représentent chacune une vue en perspective de trois quarts d'un côté du dispositif de reprise d'effort fixé sur un longeron.

### EXPOSÉ DÉTAILLÉ DE MODES DE RÉALISATION PARTICULIERS

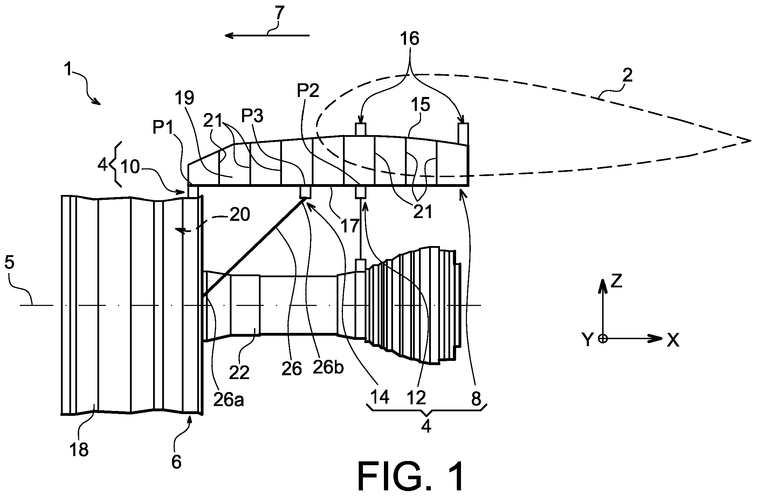

En référence à la figure 1, on voit un ensemble moteur 1 pour aéronef destiné à être fixé sous une aile 2 de cet aéronef représentée uniquement schématiquement en pointillés pour des raisons de clarté, cet ensemble 1 comportant un dispositif d'accrochage 4, ainsi qu'un moteur 6 tel qu'un turboréacteur accroché sous ce dispositif 4.

Globalement, le dispositif d'accrochage 4 comporte une structure rigide 8 portant des moyens d'accrochage du moteur 6, ces moyens d'accrochage disposant d'une pluralité d'attaches moteur 10, 12, ainsi que d'un dispositif de reprise des efforts de poussée 14 générés par le moteur 6.

A titre indicatif, il est à noter que l'ensemble 1 est destiné à être entouré d'une nacelle (non représentée), et que le dispositif d'accrochage 4 comporte une autre série d'attaches 16 permettant d'assurer la suspension de cet ensemble 1 sous la voilure 2 de l'aéronef.

Dans toute la description qui va suivre, par convention, on appelle X la direction longitudinale du dispositif 4 qui est également assimilable à la direction longitudinale du turboréacteur 6, cette direction X étant parallèle à un axe longitudinal 5 de ce turboréacteur 6 et à celle du dispositif 14. D'autre part, on appelle Y la direction orientée transversalement par rapport au dispositif 4 et également assimilable à la direction transversale du turboréacteur 6 et à celle du dispositif 14, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par le turboréacteur 6, cette direction étant représentée schématiquement par la flèche 7.

Sur la figure 1, on peut voir les deux attaches moteur 10, 12, la série d'attaches 16, le dispositif de reprise des efforts de poussée 14, et la structure rigide 8 du dispositif d'accrochage 4. Les autres éléments constitutifs non représentés de ce dispositif 4, tels que la structure secondaire assurant la ségrégation et le maintien des systèmes tout en supportant des carénages aérodynamiques, sont des éléments classiques identiques ou similaires à ceux rencontrés dans l'art antérieur, et connus de l'homme du métier. Par conséquent, il n'en sera fait aucune description détaillée.

D'autre part, il est indiqué que le turboréacteur 6 dispose à l'avant d'un carter de soufflante 18 de grande dimension délimitant un canal annulaire de soufflante 20, et comporte vers l'arrière un carter central 22 de plus petite dimension, renfermant le coeur de ce turboréacteur. Les carters 18 et 20 sont bien entendu solidaires l'un de l'autre.

Comme on peut l'apercevoir sur la figure 1, les attaches moteur 10, 12 du dispositif 4 sont prévues au nombre de deux, et respectivement dénommées attache moteur avant et attache moteur arrière.

Dans cet exemple de réalisation, la structure rigide 8 prend la forme d'un caisson s'étendant de l'arrière vers l'avant, sensiblement selon la direction X.

Le caisson 8 prend alors la forme d'un mât de conception similaire à celle habituellement observée pour les mâts d'accrochage de turboréacteurs, notamment en ce sens qu'il est réalisé par l'assemblage d'un longeron supérieur 15, d'un longeron inférieur 17, et de deux longerons / panneaux latéraux 19 (un seul étant visible en raison de la vue de côté), ces éléments 15, 17, 19 étant raccordés entre eux par l'intermédiaire de nervures transversales 21 prenant chacune globalement la forme d'un rectangle. Ainsi, les nervures 21 s'étendent dans des plans YZ, les longerons 15, 17 s'étendent grossièrement dans des plans XY, et les panneaux latéraux 19 dans des plans XZ.

Les moyens d'accrochage comportent tout d'abord l'attache moteur avant 10 interposée entre une extrémité avant de la structure rigide 8 également appelée pyramide, et une partie supérieure du carter de soufflante 18. Néanmoins, il serait également possible de prévoir que l'attache moteur avant 10 soit fixée sur un carter de liaison entre le carter central et le carter de soufflante, comme cela est connu de l'homme du métier. L'attache moteur avant 10, conçue de manière classique et connue de l'homme du métier, est fixée en un premier point P1 de la structure rigide 8, cette dernière étant également dénommée structure primaire.

D'autre part, l'attache moteur arrière 12, également réalisée de façon classique et connue de l'homme du métier, est quant à elle interposée entre la structure rigide 8 et le carter central 22, et fixée en un second point P2 de la structure rigide 8 placé en arrière par rapport au point P1. Dans l'exemple représenté, le dispositif de reprise d'effort 14 est fixé au caisson en un troisième point P3, situé entre le premier point P1 et le second point P2.

Cependant on peut prévoir de manière avantageuse, comme nous le verrons dans la suite de la description, un dispositif d'accrochage dans lequel le dispositif de reprise d'efforts de poussée 14 est raccordé sur l'attache arrière 12.

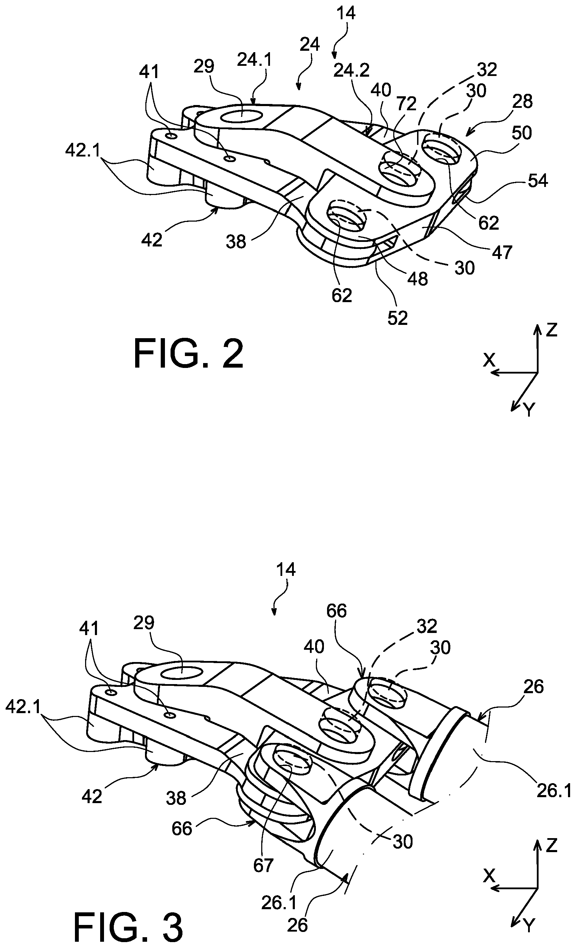

Sur les figures 2, 3 et 4, est représenté un exemple de réalisation d'un dispositif de reprise d'effort de poussée selon la présente invention.

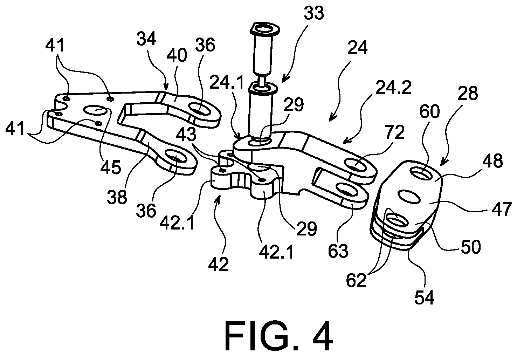

Le dispositif selon la présente invention comporte une ferrure principale 24, deux bielles 26 (non représentées sur les figures 2 et 4) liées mécaniquement à un palonnier 28 par une extrémité longitudinale arrière au moyen d'un axe 30.

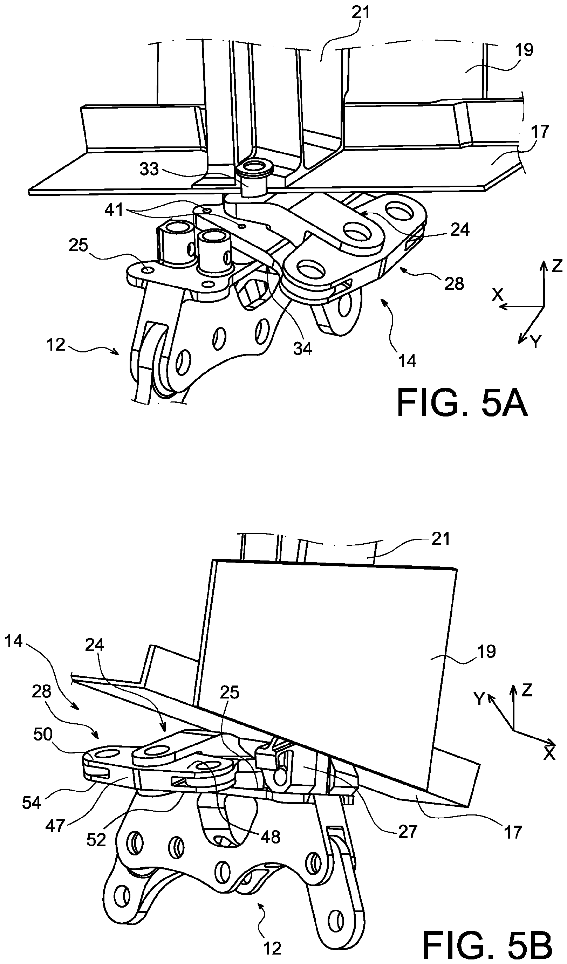

Comme on peut le voir sur les figures 5A et 5B, la ferrure principale 24 est destinée à être solidarisée au caisson 8 par une fixation sur une poutre 25 de l'attache moteur arrière 12, appelé ci-après poutre attache moteur arrière, par l'intermédiaire de fixations qui seront décrites par la suite. La poutre attache moteur arrière 25 est fixée sur le caisson 8 par l'intermédiaire de pelles 27 éclissées sur les panneaux latéraux 19, visibles sur la figure 5B. Dans cet exemple, il n'y a que deux points d'interface entre le moteur et le mât.

Le palonnier 28 est lui-même lié mécaniquement à la ferrure principale 24 par un axe 32, dit axe principal.

L'axe 32 se trouve sensiblement dans un plan médian du caisson et les bielles 26 sont disposées sensiblement symétriquement par rapport à ce plan médian.

La ferrure principale 24 est destinée à reprendre la poussée transmise par les bielles 26, par l'intermédiaire du palonnier 28.

La ferrure principale 24 comporte une première platine 24.1 munie d'un alésage 29 destiné à recevoir un pion de poussée 33 transmettant l'effort de poussée au mât. Le pion de poussée 33 est solidaire d'une des nervures transversales 21 du caisson 8 (Figure 5A), et une deuxième platine 24.2 sur laquelle est monté le palonnier 28.

De manière avantageuse, le pion de poussée 33 est doublé, i.e. il comporte un axe intérieur et un axe extérieur comme cela est visible sur la figure 4 ; ainsi en cas de rupture de l'axe extérieur, l'axe intérieur prend le relais pour la transmission de la poussée vers le mât.

La deuxième platine 24.2 est contenue dans un plan incliné par rapport à celui contenant la première platine 24.1. Cette configuration permet l'orientation des bielles entre la ferrure principale 24 et le carter de soufflante, ce carter étant disposé à un niveau inférieur par rapport à la ferrure principale 24.

On pourrait également prévoir une ferrure principale 24 sensiblement plane, l'inclinaison étant alors obtenue par une pièce intercalaire en biseau disposée entre la ferrure principale 24 et le caisson 8, ou alors prévoir un biseau entre la deuxième platine 24.2 et le palonnier 28.

Selon la présente invention, le dispositif de reprise d'effort comporte une ferrure supplémentaire 34 destinée à permettre une reprise d'effort en cas de rupture de bielles, du palonnier ou de l'axe principal 32. La ferrure supplémentaire 34 forme une pièce additionnelle distincte de la ferrure principale 24.

La ferrure supplémentaire 34 comporte des alésages 36 visibles sur la figure 4, pour le passage des axes 30 des bielles 26, le montage des axes 30 dans les alésages 36 étant réalisé avec jeu pour éviter de solliciter la ferrure supplémentaire 34 en fonctionnement normal.

Dans l'exemple représenté, la ferrure supplémentaire 34 a sensiblement la forme d'un V dont chacun des bras 38, 40 comporte un alésage 36 au niveau de son extrémité libre, pour le montage d'un axe 30.

La ferrure supplémentaire 34 comporte au niveau de la base du V formée par les extrémités des bras 38, 40 se raccordant, des alésages 41, par exemple quatre, en regard d'alésages 43 réalisés dans la ferrure principale 24. Ces alésages 41, 43 reçoivent des fixations de traction (non représentées), pour la fixation des ferrures principale 24 et supplémentaire 34 sur la poutre attache moteur arrière 25.

La ferrure supplémentaire 34 comporte également un alésage 45 réalisé sensiblement dans la partie centrale de la base pour le passage du pion de poussée 33.

Dans l'exemple représenté, la base de la ferrure supplémentaire 34 est reçue entre la première platine 24.1 et une platine parallèle 42 en dessous de la platine 24.1, et se raccordant à une face inférieure de celle-ci. La platine 42 comporte un alésage 29' en regard de l'alésage 29 pour recevoir une extrémité du pion de poussée 33.

Cette configuration assure un encombrement réduit entre le longeron inférieur 17 du mât et la poutre attache moteur arrière 25.

La base de la ferrure supplémentaire 34 est alors fixée à cette platine inférieure 42.

De manière avantageuse, la platine inférieure 42 de la première platine 24.1 comporte un corps central sensiblement rectangulaire de largeur réduite muni à ses quatre coins de brides 42.1 en saillie, munies chacune de l'alésage 43 en regard d'alésages 41 pratiqués dans la base de la ferrure supplémentaire 34. Cette forme permet de réduire la masse de la ferrure principale 24 et donc du dispositif dans son ensemble.

Une telle forme peut également être prévue pour la base de la ferrure supplémentaire 34.

Les bras 38, 40 de la ferrure supplémentaire s'étendent de part et d'autre de la deuxième platine 24.2 par rapport au plan médian du caisson 8.

La ferrure supplémentaire 34 a sensiblement, vu de côté, le même profil que celui de la ferrure principale 24, i.e. la base du V est contenue dans un plan parallèle à celui de la première platine 24.1 et les bras sont contenus dans un plan parallèle à celui de la deuxième platine 24.2.

Le palonnier 28 comporte un corps central 47 muni de deux oreilles latérales supérieures 48, 50 et de deux oreilles latérales inférieures 52, 54 formant des chapes latérales et recevant chacune une extrémité libre des bras 38, 40.

Les oreilles supérieure 48 et inférieure 52 comportent des alésages 60 en regard pour la passage d'un axe 30. De même, les oreilles supérieure 50 et inférieure 54 comportent des alésages 62 en regard pour le passage d'un axe 30.

Dans l'exemple représenté, chaque bielle 26 comporte, à son extrémité arrière 26.1, une chape 66 destinée à venir entourer les chapes latérales du palonnier 28, chaque chape 66 comportant des alésages 67 pour le montage de l'axe 30.

Le corps central 47 du palonnier est reçu dans une chape 63 de la ferrure principale 24.

Des alésages 72 sont prévus dans la deuxième platine 24.2 de la ferrure principale 24 pour le passage de l'axe 32.

L'emboîtement de la ferrure principale 24, de la ferrure supplémentaire 34, du palonnier 28 et des bielles 26 permet de réaliser un dispositif de reprise d'effort très compact.

Le dispositif de reprise 14 est ainsi en mesure de reprendre des efforts exercés principalement selon la direction longitudinale X.

De cette manière, les efforts s'exerçant selon la direction longitudinale X sont exclusivement repris par le dispositif de reprise des efforts de poussée 14, les efforts s'exerçant selon la direction transversale Y sont repris conjointement par les attaches avant 10 et arrière 12, et les efforts s'exerçant selon la direction verticale Z sont également repris conjointement par l'attache avant 10 et les deux demi-attaches de l'attache arrière 12.

D'autre part, la reprise du moment s'exerçant selon la direction X est assurée uniquement par les deux demi-attaches de l'attache arrière 12, tandis que la reprise des moments s'exerçant selon les directions Y et Z est assurée conjointement par ces deux attaches moteur 10, 12.

Nous allons maintenant décrire les chemins de transmission des forces de poussée des bielles 26 au caisson 8 dans différentes situations.

En configuration normale, i.e. dans la configuration représentée sur la figure 3, les efforts de poussée du turbomoteur sont transmis par les deux bielles 26, au palonnier 28 au travers des deux axes 30. Le palonnier 28 a alors une position sensiblement équilibrée, puisque les efforts transmis par les bielles sont sensiblement identiques. Ces efforts sont ensuite transmis à la ferrure principale 24 au travers de l'axe 32. Les efforts sont alors repris par le caisson 8 par le biais du pion de poussée 33 solidaire du mât et se logeant dans les alésages 29, 29' de la ferrure principale 24 et dans l'alésage 45 de la ferrure supplémentaire 34, les ferrures principale 24 et supplémentaire 34 étant fixées sur la poutre attache moteur arrière 25.

La ferrure supplémentaire 34 n'intervient pas du fait du jeu entre les axes 30 et les alésages 36 dans les extrémités libres des branches 38, 40.

Dans le cas d'une rupture de bielle 26, les efforts de poussée ne sont transmis que par la bielle intacte 26 sur le palonnier 28, le palonnier 28 bascule alors autour de l'axe 32. Cependant l'axe 30 reliant la bielle 26 intacte au palonnier 28 vient alors en appui contre le contour de l'alésage 36 correspondant de la ferrure supplémentaire 34. Le basculement autour de l'axe 32 du palonnier 28 est alors limité. Les efforts sont ainsi transmis à la ferrure principale 24 via l'axe 30 et la ferrure supplémentaire 34 fixée sur la ferrure principale 24 par les fixations de traction se logeant dans les alésages 41. Les efforts sont ensuite repris par le caisson 8 par l'intermédiaire du pion de poussée 33.

Le dispositif selon la présente invention évite les risques d'endommagement des palles latérales en cas de rupture de bielles, ce qui améliore la réparabilité du dispositif.

En cas de rupture du palonnier 28, les efforts sont transmis par chaque axe 30 venu en appui contre le contour de l'alésage 36 de la ferrure supplémentaire 34 le recevant, les efforts sont ensuite transmis à la ferrure principale 24 par les quatre fixations fixant la ferrure supplémentaire 34 sur la ferrure principale 24.

Le dispositif de reprise d'effort selon la présente invention offre une conception simple et compacte, et sa masse est diminuée. Par ailleurs, le coût de fabrication est réduit.

Ce dispositif ne nécessite par ailleurs aucun outillage de pose ou de dépose du turbomoteur particulier.

En outre, le dispositif de reprise d'effort selon l'invention permet son raccordement à l'attache arrière comme cela a été décrit plus haut en relation avec les figures 5A et 5B. Ainsi, de manière avantageuse, on peut ne prévoir que deux points d'interface entre le moteur et le mât, ce qui évite le recours à des outillages de montage spéciaux.

Le dispositif de reprise d'effort représenté sur les figures 2 à 4, A et 5B a été décrit uniquement à titre d'exemple et est non limitatif. Des modifications pourront être apportées sans sortir du cadre de l'invention. Par exemple, les liaisons mécaniques entre les bielles, le palonnier et la ferrure supplémentaire pourraient être réalisées de manière différente. On pourrait prévoir notamment que l'extrémité arrière des bielles ne comporte pas de chape et soit montée à l'intérieur de chapes latérales du palonnier, les deux bras de la ferrure supplémentaire comportant, quant à eux, au niveau de leur extrémité libre, des chapes entourant les chapes latérales du palonnier.

Les liaisons mécaniques entre chaque bielle et la ferrure supplémentaire et entre chaque bielle et le palonnier pourraient également être du type rotule.

## Revendications

1. Dispositif d'accrochage de moteur pour aéronef comportant un dispositif de reprise d'effort comportant une ferrure principale (24) destinée à être fixée sur une poutre attache moteur (25) fixée sur un caisson (8), une ferrure supplémentaire (34) fixée sur la ferrure principale (24), la ferrure supplémentaire (34) étant distincte de la ferrure principale (24), deux bielles (26) de reprise d'effort reliées à la ferrure principale (24) par un palonnier (28), chacune des bielles (26) étant reliée par une première extrémité longitudinale au palonnier (28) par une première liaison mécanique présentant au moins un axe de rotation, chacune des bielles (26) étant reliée par leur première extrémité longitudinale à la ferrure supplémentaire (34) par une deuxième liaison mécanique présentant au moins un axe de rotation, ladite deuxième liaison mécanique présentant un jeu, lesdites première et deuxième liaisons mécaniques ayant au moins un axe de rotation en commun.

2. Dispositif d'accrochage selon la revendication 1, dans lequel les première et deuxième liaisons mécaniques comportent chacune un seul axe de rotation, réalisé au moyen d'un axe (30) traversant la bielle (26), le palonnier (28) et la ferrure supplémentaire (34), le jeu de la deuxième liaison mécanique étant obtenu par un alésage de diamètre supérieur à l'axe (30), pratiqué dans la ferrure supplémentaire (34).

3. Dispositif d'accrochage selon la revendication 2, dans lequel la ferrure supplémentaire (34) comporte une base et des bras (38, 40) formant sensiblement un V, ladite base étant fixée sur la ferrure principale (24) et les bras (38, 40) s'étendant de chaque côté latéral de la ferrure principale (24) en direction du palonnier (28), les axes (30) des bielles (26) traversant des alésages pratiqués dans des extrémités des bras (38, 40) de la ferrure supplémentaire (34).

4. Dispositif d'accrochage selon la revendication 3, dans lequel la ferrure principale (24) comporte deux branches (24.1, 42) ménageant un entrefer recevant la base de la ferrure supplémentaire (34).

5. Dispositif d'accrochage selon la revendication 3 ou 4, dans lequel le palonnier (28) comporte des chapes latérales recevant les extrémités des bras (38, 40) de la ferrure supplémentaire (34), les bielles (26) comportant chacune une chape (66) entourant chacune une chape latérale du palonnier (28).

6. Dispositif d'accrochage selon la revendication 5, dans lequel le palonnier (28) est relié mécaniquement à la ferrure principale (24) par un axe (32) traversant la ferrure principale (24) et un corps central (47) du palonnier (28) duquel font saillie les flasques latérales.

7. Dispositif d'accrochage selon la revendication 6, dans lequel les axes (30) reliant les bielles (26) au palonnier (28) et à la ferrure supplémentaire (34) et l'axe (32) reliant le palonnier (28) à la ferrure principale (24) sont parallèles.

8. Dispositif d'accrochage selon l'une des revendications 1 à 7, comportant une attache moteur avant (10) et une attache moteur arrière (12), le dispositif de reprise d'effort étant raccordé à l'attache moteur arrière (12).

9. Ensemble moteur comprenant un moteur (6) et un dispositif d'accrochage (4) du moteur (6), ledit dispositif d'accrochage étant un dispositif selon l'une quelconque des revendications précédentes.

10. Aéronef comportant au moins un ensemble moteur selon la revendication 9, assemblé sur une aile ou sur une partie arrière de fuselage de cet aéronef.

## Patentansprüche

1. Vorrichtung zur Befestigung eines Flugzeugtriebwerks, die eine Kraftaufnahmevorrichtung umfasst, die ein Hauptverbindungsstück (2) zur Fixierung an einem Triebwerkbefestigungsträger (25), der an einem Kasten (8) fixiert ist, ein Nebenverbindungsstück (34), das an dem Hauptverbindungsstück (24) fixiert ist, wobei das Nebenverbindungsstück (34) von dem Hauptverbindungsstück (24) separat ist, zwei Kraftaufnahmestangen (26), die durch eine Ausgleichsvorrichtung (28) mit dem Hauptverbindungsstück (24) verbunden sind, wobei jede der Stangen (26) über ein erstes Längsende über eine erste mechanische Verbindung, die mindestens eine Drehachse aufweist, mit der Ausgleichsvorrichtung (28) verbunden ist, wobei jede der Stangen (26) über ihr erstes Längsende über eine zweite mechanische Verbindung, die mindestens eine Drehachse aufweist, mit dem Nebenverbindungsstück (34) verbunden ist, wobei die zweite mechanische Verbindung ein Spiel aufweist, wobei die erste und die zweite mechanische Verbindung mindestens eine gemeinsame Drehachse aufweisen, umfasst.

2. Befestigungsvorrichtung nach Anspruch 1, wobei die erste und die zweite mechanische Verbindung jeweils eine einzige Drehachse umfassen, die durch eine Achse (30), die durch die Stange (26), die Ausgleichsvorrichtung (28) und das Nebenverbindungsstück (34) verläuft, gebildet wird, wobei das Spiel der zweiten mechanischen Verbindung durch eine in dem Nebenverbindungsstück (34) ausgebildete Bohrung, die einen größeren Durchmesser als die Achse (30) aufweist, erzielt wird.

3. Befestigungsvorrichtung nach Anspruch 2, wobei das Nebenverbindungsstück (34) eine Basis und Arme (38, 40), die im Wesentlichen ein V bilden, umfasst, wobei die Basis an dem Hauptverbindungsstück (24) fixiert ist und sich die Arme (38, 40) auf jeder lateralen Seite des Hauptverbindungsstücks (24) in Richtung der Ausgleichsvorrichtung (28) erstrecken, wobei die Achsen (30) der Stangen (26) durch in den Enden der Arme (38, 40) des Nebenverbindungsstücks (34) ausgebildeten Bohrungen verlaufen.

4. Befestigungsvorrichtung nach Anspruch 3, wobei das Hauptverbindungsstück (24) zwei Schenkel (24.1, 42) umfasst, die einen Spalt bilden, in dem die Basis des Nebenverbindungsstücks (34) aufgenommen wird.

5. Befestigungsvorrichtung nach Anspruch 3 oder 4, wobei die Ausgleichsvorrichtung (28) laterale Gabelstücke umfasst, in denen die Enden der Arme (38, 40) des Nebenverbindungsstücks (34) aufgenommen werden, wobei die Stangen (26) jeweils ein Gabelstück (66) tragen, die jeweils ein laterales Gabelstück der Ausgleichsvorrichtung (28) umgeben.

6. Befestigungsvorrichtung nach Anspruch 5, wobei die Ausgleichsvorrichtung (28) durch eine Achse (32), die durch das Hauptverbindungsstück (24) und einen mittleren Körper (47) der Ausgleichsvorrichtung (28), von dem die lateralen Flansche vorstehen, verlaufen, mechanisch mit dem Hauptverbindungsstück (24) verbunden ist.

7. Befestigungsvorrichtung nach Anspruch 6, wobei die Achsen (30), die die Stangen (26) mit der Ausgleichsvorrichtung (28) und dem Nebenverbindungsstück (34) verbinden, und die Achse (32), die die Ausgleichsvorrichtung (28) mit dem Hauptverbindungsstück (24) verbindet, parallel sind.

8. Befestigungsvorrichtung nach einem der Ansprüche 1-7, die eine vordere Triebwerkbefestigung (10) und eine hintere Triebwerkbefestigung (12) umfasst, wobei die Kraftaufnahmevorrichtung mit der hinteren Triebwerkbefestigung (12) verbunden ist.

9. Triebwerkanordnung, die ein Triebwerk (6) und eine Vorrichtung (4) zur Befestigung des Triebwerks (6) umfasst, wobei die Befestigungsvorrichtung eine Vorrichtung nach einem der vorhergehenden Ansprüche ist.

10. Flugzeug, das mindestens eine Triebwerkanordnung nach Anspruch 9 umfasst, die an einer Tragfläche oder einem hinteren Teil des Flugzeugrumpfs montiert ist.

## Claims

1. Device for attachment of an engine for an aircraft comprising a thrust force take-up device which includes a main fitting (24) designed to be fixed onto an engine mounting beam (25) fixed onto a box structure (8), an additional fitting (34) fixed onto the main fitting (24), where the additional fitting (34) is distinct from the main fitting (24), two load reacting link rods (26) linked to the main fitting (24) by a balance beam (28), where each of the link rods (26) is connected at a first longitudinal end to the balance beam (28) by a first mechanical connection that has at least one axis of rotation, where each of the link rods (26) is linked at its first longitudinal end to the additional fitting (34) by a second mechanical connection that has at least one axis of rotation, where said second mechanical connection has play and where said first and second mechanical connections have at least one axis of rotation in common.

2. Attachment device according to claim 1 in which the first and second mechanical connections each include a single axis of rotation, made using a pin (30) which passes through the link rod (26), the balance beam (28) and the additional fitting (34), where play in the second mechanical connection is achieved by means of a bore, whose diameter is greater than the pin (30), made in the additional fitting (34).

3. Attachment device according to claim 2 in which the additional fitting (34) includes a base and arms (38, 40) which approximately form a V, where said base is fixed to the main fitting (24) and where the arms (38, 40) extend on each lateral side of the main fitting (24) in the direction of the balance beam (28), with the pins (30) of the link rods (26) passing through the bores made in the ends of the arms (38, 40) of the additional fitting (34).

4. Attachment device according to claim 3 in which the main fitting (24) includes two branches (24.1, 24.2) which form a gap which holds the base of the additional fitting (34).

5. Device according to claim 3 or 4 in which the balance beam (28) includes lateral forks which hold the ends of the arms (38, 40) of the additional fitting (34), with the link rods (26) each including a fork (66) each of which surrounds a lateral fork of the balance beam (28).

6. Attachment device according to claim 5, in which the balance beam (28) is mechanically linked to the main fitting (24) by a pin (32) passing through the main fitting (24) and a central body (47) of the balance beam (28) from which the lateral flanges protrude.

7. Device according to claim 6, in which the pins (30) which connect the link rods (26) to the balance beam (28) and to the additional fitting (34) and the pin (32) linking the balance beam (28) to the main fitting (24) are parallel.

8. Attachment device according to one of claims 1 to 7, which includes a forward engine attachment member (10) and a rear engine attachment member (12), where the thrust force take-up device is connected to the rear engine attachment member (12).

9. Engine assembly which includes an engine (6) and a device (4) for attaching the engine (6), where said attachment device is a device according to any one whatsoever of the previous claims.

10. Aircraft which includes at least one engine assembly according to claim 9, assembled onto a wing or onto a rear part of the fuselage of this aircraft.
